# EUROPEAN PATENT SPECIFICATION

(11) **EP 1 024 504 B1**
(45) Date of publication and mention of the grant of the patent: **31.03.2004**
(21) Application number: 00100049.6
(22) Date of filing: 05.01.2000
(51) Int. Cl.: H01F 7/16, F16K 31/08, F16K 11/20

(54) **Improved electromagnetic actuator for washing and similar machines**
Elektromagnetischer Betätiger für Waschmaschinen und ähnliche Geräte
Actionneur électromagnétique pour machines à laver et appareils similaires

(30) Priority: 28.01.1999 IT PN990013
(43) Date of publication of application: 02.08.2000
(73) Proprietor: Electrolux Zanussi S.p.A., 33170 Pordenone (IT)
(72) Inventor: Frucco, Giuseppe, 33170 Pordenone (IT); Peressi, Valentino, 33100 Udine (IT)
(74) Representative: Giugni, Valter

(56) References cited:
- FR-A- 2 740 848
- GB-A- 2 052 886

## Description

The present invention refers to an electromagnetic actuator adapted for use in washing or similar machines to control the operation of operational component parts thereof, such as valves or mechanical devices as they may be used in such machines, eg. leverages for the actuation of command or control mechanisms.

Washing machines are generally known to make use of various operational organs, in particular electrically operated valves, which are normally idling and must in fact be temporarily operated only in correspondence of certain operation phases of the machine, for example in view of enabling water to be delivered into a detergent dispenser and/or a washing vessel or tank.

Each such operational organ of the above cited kind is again generally known to be operable through a respective electromagnetic actuator that mainly comprises a solenoid which is energizable by the application of an alternating current to switch over a moving member from a resting position to a working position. In the general case of an electrically operated valve, such a displacement of the moving member into the working position thereof causes the same valve to open.

Such a reduction in component count has been proposed in IT-A-1 203 572, in which one or more evaporators can be selectively inserted in a refrigerating circuit by means of a bistable flow-deflecting electromagnetic valve. The latter comprises a solenoid actuator adapted to be energized with electric pulses of different polarity to switch over said valve from a first operational position to a second operational position, or vice-versa, in which the same valve then remains when no current is applied to the solenoid.

This solution enables a single electromagnetic actuator to be used, which however is only capable of switching the valve to and from said two above cited operating positions. The valve can in fact work to only deviate a flow of an inflowing fluid, while it is not capable of shutting off such a flow. Conclusively, such an operating capability can actually find a use in refrigerating circuits and similar applications, but is fully inadequate in the case of washing or similar machines, in which it is basically necessary for the actuator to be capable of normally determining also a resting position of the valve.

It therefore is a main purpose of the present invention to provide an improved electromagnetic actuator for washing and similar machines, which enables the number of the main component parts to be drastically reduced.

A further purpose of the present invention is to provide an electromagnetic actuator of the above cited kind, the operation of which is particularly suited to the use thereof in washing machines.

According to the present invention, these aims are reached in an electromagnetic actuator for washing and similar machines embodying the features as recited in the appended claims.

Characteristics and advantages of the invention will anyway be more readily understood from the description that is given below by way of non-limiting example with reference to the accompanying drawings, in which:

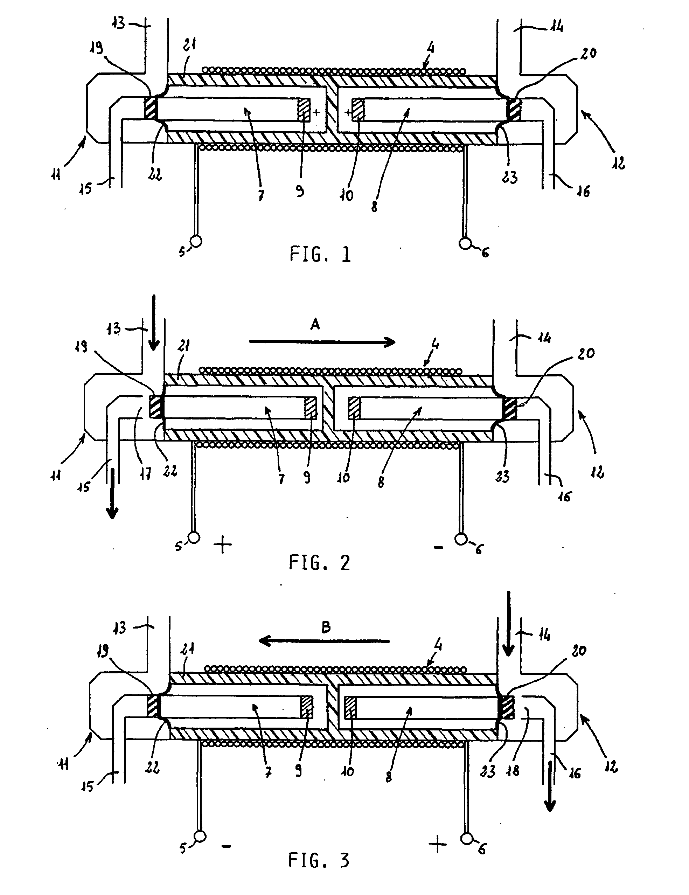

- Figures 1 to 3 are views of a preferred embodiment of the present invention respective operating conditions thereof.

With reference to the above Figures, the actuator can be noticed to mainly comprise a solenoid 4 having two terminals 5, 6 to which a unidirectional voltage can be applied so as to generate a corresponding electromagnetic (magnetostatic) field extending in a substantially axial direction.

The actuator further comprises two actuating members 7, 8 that are freely movable with respect to the solenoid 4, with respect to which they are preferably coaxial. In a preferred manner, said actuating members are capable of freely sliding axially inside a support body 21 made of non-magnetic material, eg. plastics, around which the solenoid 4 is wound.

The actuating members 7, 8 are arranged side by side with each other axially, at a certain distance from each other, wherein each one of them comprises a respective permanent magnet 9, 10. Said magnets 9 and 10 are arranged with mutually opposing polarities, eg. as illustrated in Figure 1, so as to be capable of mutually repulsing each other axially. Moreover, said magnets 9 and 10are adapted to link with the magnetic flux generated by the solenoid 4 when the latter is energized with the above cited unidirectional voltage. As this will be described in greater detail further on, said magnetic flux develops in a sense that is dependent on the direction of winding of the solenoid 4 and the polarity of the unidirectional voltage applied to the terminals 5, 6.

In the preferred example of embodiment illustrated in the Figures, the moving members 7, 8 are adapted to actuate respective valves which are normally closed (when at rest) and have respective inlets 13, 14 and respective outlets 15, 16.

In a per se known manner, said inlets 13, 14 of the valves 11, 12 are adapted to communicate with the respective outlets 15, 16 when the valves are in their operating position. To this end, the valves 11, 12 (which are only represented schematically in the Figures owing to reasons of greater simplicity) comprise appropriate hydraulic communication passages 17, 18 which are normally closed by respective sealing gaskets 19, 20. These are connected to said moving members 7, 8, respectively, which are in turn hydraulically isolated by means of respective flexible sealing diaphragms 22, 23.

The valves 11, 12 can be used in a clothes washing machine, a dishwashing machine or the like to control respective water flows that must be delivered, for example, into a washing tub or vessel through respective compartments of a washing and/or rinsing aid dispenser, in a substantially per se known manner.

During machine operation, when no voltage is applied to the terminals 5, 6 the moving members 7, 8 are kept in their normal resting position shown in Figure 1, in which the valves 11 and 12 are closed, owing to the magnetic force of mutual repulsion exerted by the magnets 9, 10.

When a unidirectional voltage having a first polarity is then applied to the terminals 5, 6, as illustrated for example in Figure 2, the corresponding magnetic field generated by the solenoid 4 exerts on the magnet 10 a pushing force (represented by the arrow A in Figure 2) that keeps the moving member 8 in the position in which the associated valve 12 is closed.

At the same time, the above cited pushing force A is capable of overcoming the force of mutual repulsion existing between the magnets 9, 10 and, as a result, axially displaces the magnet 9, jointly with the associated moving member 7, into a position (shown in Figure 2) in which the sealing gasket 19 opens the valve 11 by disengaging the hydraulic communication passage 17.

When a unidirectional voltage having a second polarity, ie. a polarity that is opposite to the first one, is then applied to the terminals 5, 6, as illustrated in Figure 3, the corresponding magnetic field generated by the solenoid 4 exerts on the magnet 9 a pushing force (represented by the arrow B in Figure 3) that keeps the moving member 7 in the position in which the associated valve 11 is closed.

At the same time, the above cited pushing force is capable of overcoming the force of mutual repulsion existing between the magnets 9, 10 and, as a result, axially displaces the magnet 10, jointly with the associated moving member 8, into a position (shown in Figure 3) in which the sealing gasket 20 opens the valve 12 by disengaging the hydraulic communication passage 18.

As soon as the control voltage applied to the terminals 5, 6 is removed therefrom, ie. come to cease, the electromagnetic actuator will of course switch back automatically into its resting position shown in Figure 1, owing to the action of mutual repulsion of the two magnets 9, 10.

Anyone skilled in the art will readily appreciate that the application of the above-cited unidirectional voltages with opposite polarity can be controlled and performed in any of a number of suitable manners existing to such a purpose, eg. by means of a (per se known and not shown) bridge-type electric circuit or by each time applying a suitable control voltage between one of the terminals 5, 6 and a further terminal (not shown either, for reasons of greater simplicity) provided on the solenoid 4 in an intermediate position thereof.

In any case, the electromagnetic actuator according to the present invention has a simple and reliable structure and, above all, requires just a single solenoid to selectively operate two distinct valves 11, 12, or any other similar operational organs, into respective resting and operating positions. Conclusively, in the considered application in a washing machine the number of electromagnetic actuators needed to operate a plurality of operational organs or parts is substantially cut by half.

It will be appreciated that the above described electromagnetic actuator may be subject to a number of variations and modifications without departing from the scope of the present invention. For instance, instead of operating two water-flow valves 11, 12, at least one of said moving members 7, 8 may be used to operate a linkage or leverage system used to actuate a per se known control or actuation mechanism.

## Claims

1. Electromagnetic actuator for washing machines, comprising a solenoid capable of being supplied selectively with a unidirectional voltage having a first and a second polarity so as to generate a magnetic field having a corresponding sense, **characterized in that** it further comprises a first and a second moving member (7, 8) that are adapted to operate associated operational valves (11, 12), said moving members being provided with respective permanent magnets (9, 10) having mutually opposing polarities so as to exert a mutually repulsing magnetic force that normally keeps said moving members (7, 8) in a resting position thereof, said magnets (9, 10) being adapted to link with said magnetic field generated by the solenoid (4), which exerts a pushing force (A; B) adapted to overcome said repulsing force and selectively switching said first or said second moving member (7, 8) into a respective operating position thereof when said unidirectional voltage has said first or said second polarity, respectively..

2. Electromagnetic actuator according to claim 1, **characterized in that** said moving members (7, 8) are arranged side by side with each other axially, at a certain distance from each other.

3. Electromagnetic actuator according to claim 1, **characterized in that** at least one of said operational valves (11, 12) comprises a water flow control valve with at least an inlet (13; 14) and an outlet (15; 16) that are capable of being connected to each other through a passage (17; 18) adapted to be selectively closed or opened by a sealing gasket (19; 20) connected to a corresponding moving member (7, 8), when the latter switches from said resting position and said operating position thereof and vice-versa.

## Patentansprüche

1. Elektromagnetischer Aktuator für Waschmaschinen, welcher einen Elektromagneten umfasst, der imstande ist, auf selektive Weise mit einer Gleichspannung versorgt zu werden, welche eine erste und eine zweite Polarität aufweist, so dass ein Magnetfeld erzeugt wird, welches eine entsprechende Richtung hat, **dadurch gekennzeichnet, dass** er ferner umfasst: ein erstes und ein zweites bewegliches Teil (7, 8), die so ausgelegt sind, dass sie die mit ihnen verbundenen funktionellen Ventile (11, 12) ansteuern, wobei die besagten beweglichen Teile mit zugehörigen Dauermagneten (9, 10) ausgestattet sind, die einander entgegengesetzt gerichtete Polaritäten aufweisen, so dass sie eine gegenseitig abstoßende Magnetkraft ausüben, welche normalerweise die besagten beweglichen Teile (7, 8) in ihrer Ruhestellung hält, wobei die besagten Magnete (9, 10) so ausgelegt sind, dass sie sich bei dem magnetischen Feld anziehen, das vom Elektromagnet (4) erzeugt wird, der eine Schubkraft (A; B) ausübt, die geeignet ist, die besagte Abstoßungskraft zu überwinden und auf selektive Weise das erste oder zweite bewegliche Teil (7, 8) in eine jeweilige Arbeitsstellung zu schalten, wenn die besagte Gleichspannung die besagte erste bzw. besagte zweite Polarität aufweist.

2. Elektromagnetischer Aktuator nach Anspruch 1, **dadurch gekennzeichnet, dass** die besagten beweglichen Teile (7, 8) in axialer Richtung beidseitig zueinander in einem gewissen Abstand voneinander angeordnet sind.

3. Elektromagnetischer Aktuator nach Anspruch 1, **dadurch gekennzeichnet, dass** mindestens eines der besagten funktionellen Ventile (11, 12) ein Steuerventil für den Wasserfluss mit mindestens einer Eintrittsöffnung (13, 14) und einer Austrittsöffnung (15, 16) aufweist, die imstande sind, untereinander über einen Verbindungsweg (17, 18) verbunden zu werden und die so ausgelegt sind, dass sie auf selektive Weise geschlossen oder geöffnet werden können durch eine abdichtende Dichtung (19, 20), die mit einem entsprechenden beweglichen Teil (7, 8) verbunden ist, wenn das Letztere von der besagten Ruhestellung in die besagte Betriebsstellung und umgekehrt schaltet.

## Revendications

1. Actionneur électromagnétique pour machines à laver, comportant un électroaimant pouvant être alimenté sélectivement à l'aide d'une tension unidirectionnelle ayant une première et une seconde polarité de manière à créer un champ magnétique ayant un sens correspondant, **caractérisé en ce qu'**il comporte de plus un premier et un second élément mobile (7, 8) qui sont adaptés pour actionner des soupapes opérationnelles associées (11, 12), lesdits éléments mobiles étant munis d'aimants permanents respectifs (9, 10) ayant des polarités mutuellement opposées de manière à exercer une force magnétique de répulsion mutuelle qui maintient normalement lesdits éléments mobiles (7, 8) dans une position de repos de ceux-ci, lesdits aimants (9, 10) étant adaptés pour être reliés à l'aide dudit champ magnétique créé par l'électroaimant (4), qui exerce une force de poussée (A ; B) adaptée pour surmonter ladite force de répulsion et commuter sélectivement ledit premier ou ledit second élément mobile (7, 8) dans une position d'actionnement respective de ceux-ci lorsque ladite tension unidirectionnelle a ladite première ou ladite seconde polarité, respectivement.

2. Actionneur électromagnétique selon la revendication 1, **caractérisé en ce que** lesdits éléments mobiles (7, 8) sont agencés axialement côte à côte l'un par rapport à l'autre, à une certaine distance l'un de l'autre.

3. Actionneur électromagnétique selon la revendication 1, **caractérisé en ce que** la au moins une desdites soupapes opérationnelles (11, 12) comprend une soupape de commande d'écoulement d'eau ayant au moins une entrée (13 ; 14) et une sortie (15 ; 16), qui peuvent être reliées l'une à l'autre par l'intermédiaire d'un passage (17 ; 18) adapté pour être sélectivement fermé ou ouvert par un joint d'étanchéité (19 ; 20) relié à un élément mobile correspondant (7, 8), lorsque ce dernier est commuté à partir de ladite position de repos et de ladite position d'actionnement de celui-ci et vice versa.
